# EUROPEAN PATENT SPECIFICATION

(11) **EP 0 960 910 B1**
(45) Date of publication and mention of the grant of the patent: **10.10.2001**
(21) Application number: 99110232.8
(22) Date of filing: 26.05.1999
(51) Int. Cl.: C08L 77/00, C08K 3/22

(54) **Flame-retardant aromatic polyamide resin compositions**
Flammgeschützte aromatische Polyamidharzzusammensetzungen
Compositions ignifugées de résine polyamide aromatique

(30) Priority: 29.05.1998 JP 14947098; 14.05.1999 JP 13481099
(43) Date of publication of application: 01.12.1999
(73) Proprietor: Ube Industries, Ltd., Ube-shi, Yamaguchi-prefecture (JP)
(72) Inventor: Akagawa, Yoshifumi, Ube-shi, Yamaguchi (JP); Urata, Yoshihiro, Ube-shi, Yamaguchi (JP)
(74) Representative: Grünecker, Kinkeldey, Stockmair & Schwanhäusser Anwaltssozietät

(56) References cited:
- EP-A- 0 448 221
- WO-A-95/15357
- DATABASE WPI Section Ch, Week 8829 Derwent Publications Ltd., London, GB; Class A23, AN 88-202071 XP002111641 & JP 63 139942 A (JAPAN SYNTHETIC RUBBER CO LTD), 11 June 1988 (1988-06-11)

## Description

### BACKGROUND OF THE INVENTION

### 1. Field of the Invention

This invention relates to a flame-retardant aromatic polyamide resin composition having excellent heat resistance, tenacity, workability and color tone.

### 2. Description of the Related Art

Owing to excellent mechanical properties, electrical properties, moldability or formability, chemical resistance and the like, polyamide resins have been used widely in various fields as automotive parts, electric or electronic parts and mechanical parts. In addition, it is possible to attain the flammability V-0 as specified in UL standards, by incorporating a flame retardant in the polyamide resins. In the electric or electronic fields, use of a polyamide resin having a high melting point has been investigated in consideration of solder resistance in addition to flammability.

For example, in JP-A-6-263986 (the term "JP-A" as used herein means an "unexamined published Japanese patent application) which corresponds to WO 95/15357, disclosed is a flame-retardant polyamide resin composition comprising a polyamide copolymer having a melting point of 280 to 330°C and, as flame retardants, polytribromostyrene or polybromophenylene ether, and an antimony compound.

Polytribromostyrene, however, must be incorporated in a large amount to maintain flammability and after molding or forming, the resulting product lacks in tenacity so that it is difficult to use such a resin composition as a material for thin-walled products such as electric or electronic parts. The use of ordinarily-employed polybromophenylene ether is, on the other hand, accompanied with a problem in the stabilization or improvement of color tone of the polyamide resin composition because of the unstable color tone of the flame retardant itself.

Accordingly, there exist difficulties in the use of such flame-retardant polyamide resin compositions in the electric electronic field where products are used in various colors.

### SUMMARY OF THE INVENTION

An object of the present invention is therefore to overcome the above-described problems and provide a flame-retardant aromatic polyamide resin composition having excellent heat resistance, tenacity, workability and color tone.

As a result of extensive investigation with a view to overcoming the above-described problems, it has been found that a well-balanced flame-retardant aromatic polyamide resin composition is available by using a specific flame retardant and a specific halogen scavenger in combination at a specific ratio, leading to the completion of the present invention.

In the present invention, there is thus provided a flame-retardant aromatic polyamide resin composition comprising:
100 parts by weight of (A) an aromatic polyamide resin having a melting point of 280 to 330°C,
15 to 60 parts by weight of (B) a terminal-modified polybromophenylene oxide,
5 to 30 parts by weight of (C) antimony trioxide,
0 to 10 parts by weight of (D) a halogen scavenger, and
0 to 200 parts by weight of (E) an inorganic filler.

The present invention makes it possible to provide a flame-retardant aromatic polyamide resin composition having good heat resistance, tenacity, workability and color tone; and also a molded or formed product available therefrom.

### BRIEF DESCRITPION OF THE DRAWINGS

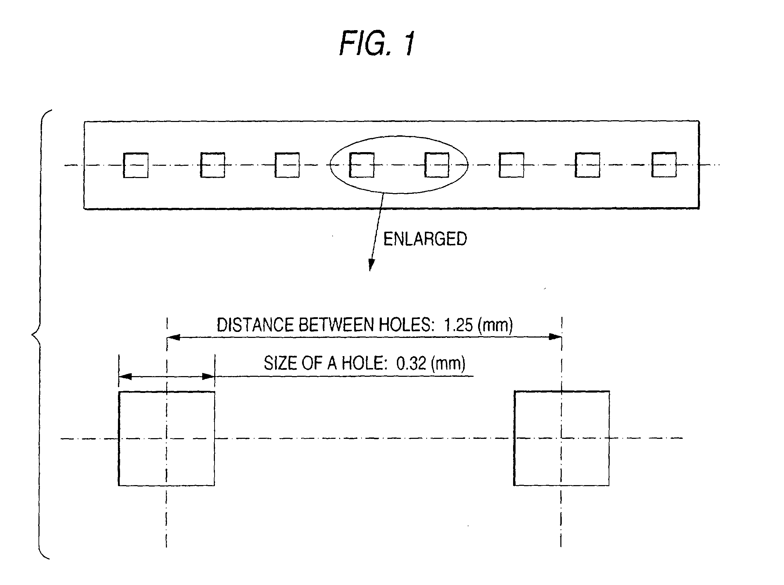

FIG. 1 illustrates one example of a pin pressure-fit type connector used for the measurement of tenacity.

### DETAILED DESCRIPTION OF THE INVENTION

The present invention will hereinafter be described in detail.

The aromatic polyamide resin having a melting point of 280 to 330°C, which is used as a component (A) in the present invention, is a crystalline partly aromatic copolyamide resin which contains at least one aromatic monomer component.

More specifically, it is a crystalline partly aromatic copolyamide which contains at least one aromatic monomer component, for example, an aromatic dicarboxylic acid component such as terephthalic acid, isophthalic acid or naphthalenedicarboxylic acid, or an aromatic diamine component such as methaxylene diamine and has a melting point of 280 to 330°C, with a crystalline partly aromatic copolyamide resin having a melting point of 290 to 320°C being preferred.

Melting points lower than 280°C cause a problem in heat resistance such as solder resistance. Melting points higher than 330°C, on the other hand, need molding or forming at higher temperatures, leading to a problem of the deterioration of the polyamide resin.

The aromatic polyamide resin (A) having a melting point of 280 to 330°C is, more specifically, a crystalline copolyamide resin composed of an equimolar salt of an aliphatic diamine and an aliphatic dicarboxylic acid and an equimolar salt of an aliphatic diamine and an aromatic dicarboxylic acid, and optionally an aliphatic-polyamide-forming monomer.

The term "aliphatic diamine" as used herein means an aliphatic diamine having 4 to 12 carbon atoms and specific examples include tetramethylenediamine, hexamethylenediamine, octamethylenediamine, nonamethylenediamine, undecamethylenediamine and dodecamethylenediamine.

The term "aliphatic dicarboxylic acid" as used herein means an aliphatic dicarboxylic acid having 6 to 12 carbon atoms and specific examples include adipic acid, heptanedicarboxylic acid, octanedicarboxylic acid, nonanedicarboxylic acid, undecanedicarboxylic acid and dodecanedicarboxylic acid.

Preferred combination is an equimolar salt of hexamethylenediamine and adipic acid.

Examples of the aromatic dicarboxylic acid include terephthalic acid, isophthalic acid and naphthalene dicarboxylic acid. Preferred combination is an equimolar salt of hexamethylenediamine and terephthalic acid.

Examples of the aliphatic-polyamide-forming monomer include aminocarboxylic acids and lactams each having 6 to 12 carbon atoms, more specifically, 6-aminocaproic acid, 7-aminoheptanoic acid, 11-aminoundecanoic acid, 12-aminododecanoic acid, α-pyrrolidone, ε-caprolactam, laurolactam and ε-enantholactum, with 6-aminocaproic acid, 12-aminododecanoic acid, ε-caprolactam and laurolactum being preferred. They may be used either singly or in combination as the aliphatic-polyamide-forming monomer.

As the aromatic polyamide resin (A), the equimolar salt of hexamethylenediamine and adipic acid, equimolar salt of hexamethylenediamine and terephthalic acid and aliphatic-polyamide-forming monomer are used in amounts of 30 to 70 wt.%, 70 to 30 wt.% and 0 to 15 wt.%, respectively, with amounts of 35 to 55 wt.%, 65 to 45 wt.% and 1 to 10 wt.% being preferred, respectively.

The terminal-modified polybromophenylene oxide (B) to be used in the present invention serves as a flame retardant and either one of polydibromophenylene oxide or polytribromophenylene oxide can be used insofar as it has a modified terminal. The term "terminal-modified polybromophenylene oxide" as used herein means polybromophenylene oxide obtained by esterification, etherification, alkylation, hydrogenation or halogenation of the terminal hydroxyl group thereof.

No particular limitation is imposed on the compound usable for esterification insofar as it is a carboxyl-containing compound used in the ordinary esterifying reaction. An ester compound which exhibits absorption at 1780 to 1700 cm⁻¹, more preferably 1750 to 1715 cm⁻¹, as a carbonyl absorption peak in the analysis of infrared absorption spectrum may be used. For example, aliphatic carboxylic acids, aromatic carboxylic acids and alicyclic carboxylic acids can be cited. Specific examples thereof include ester compound obtained by the dehydration reaction with acetic acid, propionic acid, benzoic acid, cyclohexylcarboxylic acid or the like.

Examples of the etherified compound include those obtained by the reaction with an aliphatic alcohol, aromatic alcohol or alicyclic alcohol. Specific examples thereof include ether compounds obtained by the dehydration with methanol, ethanol, phenol, monoalkyl phenol or cyclohexanol.

Examples of the alkylated compound include those obtained by methylation, ethylation, propylation, isopropylation, n-butylation, s-butylation or t-butylation.

Examples of the halogenated compound include those obtained by chlorination, bromination or iodination.

Among them, terminal-modified polybromophenylene oxides obtained by the esterification with a carboxylic acid are particularly preferred.

The molecular weight of the terminal-modified polybromophenylene oxide (B) preferably ranges from 2000 to 4000. Molecular weights lower than 2000 cause a problem in the heat resistance of polybromophenylene oxide. Molecular weights higher than 4000, on the other hand, inhibit the fluidity of the resulting aromatic polyamide resin. Molecular weights outside the above range are therefore not preferred.

The polybromophenylene oxide (B) is used in an amount of 15 to 60 parts by weight, preferably 20 to 50 parts by weight based on 100 parts by weight of the aromatic polyamide resin. When the amount is less than 15 parts by weight, the sufficient flame-retardant effects cannot be attained. When the amount is greater than 60 parts by weight, on the other hand, the ratio of the resin component becomes markedly small, which makes it difficult to carry out stable kneading. Amounts outside the above range are therefore not preferred.

Antimony trioxide (C) to be used in the present invention serves as a flame retarding assistant. Although no particular limitation is imposed on it insofar as it is commercially available, that in the form of powders having an average particle size of 0.6 to 2.0 µm and whiteness degree of at least 95 or a master pellet using these powders as a raw material is preferred in order to surely attain flammability and stabilize color tone. Particle sizes less than 0.6 µm tend to cause secondary agglomeration, while those greater than 2.0 µm largely change the hiding power, thereby darkening the color tone of the whole material.

The antimony trioxide is used in an amount of 5 to 30 parts by weight, preferably 5 to 25 parts by weight, more preferably 7 to 20 parts by weight, based on 100 parts by weight of the aromatic polyamide resin. Amounts less than 5 parts by weight bring about insufficient flammability, while amounts greater than 30 parts by weight cause failure in mechanical properties or increase in the specific gravity. Amounts outside the above range are therefore not preferred.

The halogen scavenger (D) to be used in the present invention serves to stabilize color tone and keading workability furthermore. Examples include calcium carbonate, magnesium oxide, organophosphate compounds and hydrotalcite compounds. Here, hydrotalcite compounds which are effective even in a small amount are preferred. Hydrotalcite compounds contain water of crystallization. Those which have been treated to compulsorily remove at least 30% of the crystallization water are more preferred, with those which have been treated to compulsorily remove at least 50% of the crystallization water (e.g., "DHT-4C", trade name; product of Kyowa Chemical Industry Co., Ltd.) being particularly preferred from the viewpoint of stabilizing the properties of the resin.

The halogen scavenger exhibits sufficient effects when used in an amount not greater than 10 parts by weight, preferably 0.1 to 10 parts by weight, based on 100 parts by weight of the aromatic polyamide resin. Excess amounts adversely affect the physical properties of the polyamide resin composition.

In the flame-retardant aromatic polyamide resin composition of the present invention, it is possible to incorporate, in addition to the above-described components, an additive such as thermal stabilizer, plasticizer, antioxidant, nucleating agent, colorant or mold releasing agent within an extent not damaging the properties of it. Depending on the applications of the molded or formed product, an inorganic filler (E) such as glass fibers, carbon fibers, talc, mica or the like can be added in an amount up to 200 parts by weight, preferably 10 to 180 parts by weight, more preferably 30 to 150 parts by weight, based on 100 parts by weight of the aromatic polyamide resin.

Excess amounts adversely affect the properties of the polyamide resin composition.

### EXAMPLES

The present invention will hereinafter be described more specifically by examples and comparative examples. It should however be borne in mind that the present invention is not limited by these examples.

In examples and comparative examples, the materials described below were employed.

As a polyamide resin, a polymer obtained by polymerization of the below-described components in accordance with the known melt polymerization method was employed. Here, PA66 means a polyamide composed of hexamethylenediamine and adipic acid, PA6T a polyamide composed of hexamethylenediamine and terephthalic acid and PA12 a polycondensate of laurolactam or 12-aminododecanoic acid.

### (A) Aromatic polyamide (amount of each component; wt.%)

PA1: Components PA66 / PA6T / PA12 = (50/50/0)
PA2: Components PA66 / PA6T / PA12 = (45/45/10)
PA3: Components PA66 / PA6T / PA12 = (10/85/5)
PA4: Components PA66 / PA6T / PA12 = (85/10/5)
PA5: Components PA66 / PA6T / PA12 = (30/30/40)

As components other than polyamide, commercially available products as described below were employed.

### (B) Flame retardant

FR1: "Pyroguard SR400A" (trade name; an ester-modified dibromophenol polycondensate; product of Dai-ichi Kogyo Seiyaku Co., Ltd.)
FR2: "PDBS-80" (trade name; polydibromostyrene; product of Great Lakes Chemical Co.)
FR3: "SAYTEX 8010" (trade name; ethylenebispentabromodiphenyl; product of Ethyl Corp.)
FR4: "Plasafety EB-905" (trade name; nitrogen type; product of MANAC Incorporated)
FR5: "SR245" (trade name; triazine type; product of Dai-ichi Kogyo Seiyaku Co., Ltd.)
FR6: "PO-64PB" (trade name; polybromophenylene ether; product of Great Lakes Chemical Co.)
FR7: "Pyro-Chek 68PB" (trade name; polytribromostyrene; product of Nissan Ferro Organic Chemical Co., Ltd.)
FR8: "Pyroguard SR460B" (trade name; dibromophenol polycondensate; product of Dai-ichi Kogyo Seiyaku Co., Ltd.)

### (C) Antimony trioxide

Sb₂O₃: No. 0 (antimony trioxide; product of Mikuni Smelting & Refining Co., Ltd.)

### (D) Halogen scavenger

DHT: "DHT-4C" (trade name; hydrotalcite; product of Kyowa Chemical Industry Co., Ltd.)

### (E) Inorganic filler

GC: "ECSO3T-296GH" (trade name; chopped glass fiber; product of Nippon Electric Glass Co., Ltd.)

### EXAMPLES 1 AND 2 AND COMPARATIVE EXAMPLES 1 TO 3

In each of Examples 1 and 2 and Comparative Examples 1 to 3, the components were blended at a ratio as shown in Table 1.

The resulting mixture was kneaded in an twin screw extrusion kneader ("TEM35", trade name; manufactured by Toshiba Corporation) at a resin temperature of 300 to 360°C and a discharge amount of 15 kg/h, whereby an aromatic polyamide resin composition was prepared in the form of pellets.

The following properties of the resulting resin were evaluated and the results are shown in Table 1.
(1) Kneading workability: the condition of the string of each resin composition extruded from the kneader was observed for one hour and the string break frequency caused by uneven discharge or the like was evaluated.
(2) Melting point: The resulting resin was pelletized. By using DSC (differential scanning calorimetry), the pellets were heated at a rate of 20°C/min and from the temperature peak at which fusion energy was generated, the melting point was measured. Further, heat resistance of the resins was also evaluated based on the measured melting points.

**Table 1**

| | | | Ex. 1 | Ex. 2 | Comp. Ex. 1 | Comp. Ex. 2 | Comp. Ex. 3 |
|---|---|---|---|---|---|---|---|
| Components | (A) | Kind of polyamide resin | PA1 | PA2 | PA3 | PA4 | PA5 |
| | | PA66 (parts by weight)) | 50 | 45 | 10 | 85 | 30 |
| | | PA6T (parts by weight) | 50 | 45 | 85 | 10 | 30 |
| | | PA12 (parts by weight) | 0 | 10 | 5 | 5 | 40 |
| | (B) | ER1 (parts by weight) | 36 | 36 | 36 | 36 | 36 |
| | (C) | Sb₂O₃ (parts by weight) | 12 | 12 | 12 | 12 | 12 |
| | (D) | DHT (parts by weight) | 2 | 2 | 2 | 2 | 2 |
| | (E) | GC (parts by weight) | 70 | 70 | 70 | 70 | 70 |
| Evaluation | | Kneading workability | B | A | C | A | A |
| | | Melting point | A | A | >330 | <280 | <280 |

| Evaluation standards | | | |
|---|---|---|---|
| Kneading workability | | Melting point | |
| A | No string break | A | 280 to 330°C |
| B | String break occurred 1 to 5 times | >330 | Melting point higher than 330°C |
| C | String break occurred at least 6 times | <280 | Melting point lower than 280°C |

### EXAMPLES 3 TO 8 AND COMPARATIVE EXAMPLES 4 AND 5

In each of Examples 3 to 8 and Comparative Examples 4 and 5, the components were blended at a ratio as shown in Table 2. The resulting mixture was kneaded in a twin screw extrusion kneader ("TEM35", trade name; product of Toshiba Corporation) at a resin temperature of 300 to 360°C and a discharge rate of 15 kg/h, whereby a flame-retardant aromatic polyamide resin composition was obtained in the form of pellets.

The kneading workability and the following properties of the resulting resin were evaluated and the results are shown in Table 2.
(3) Color tone: The resulting resin was pelletized, followed by the formation of a plate of 90 mm x 55 mm x 2 mm by injection molding. The color tone of the plate at that time was evaluated by observation.
(4) Flammability: The resulting resin was pelletized and a test piece having a thickness of 1/32 inch (0.794 mm) was subjected to the combustion test (UL94) as specified in UL (Underwrite Laboratories) . The flammability was evaluated based on the results.
(5) Tenacity: The resulting resin was pelletized. From the resulting pellets, a pin pressure-fit type connector (the size of a hole for pressure fitting of the pin: a quadrate of 0.32 mm in every side, the distance between holes: 1.25 mm, the number of the holes: 8) was formed and subjected to a pin pressure fitting test (diameter of the pin: 0.35 mm).

The crack appearing ratio within the distance between holes owing to the pressure fitting of the pin was measured using 10 connectors and tenacity was evaluated.

**Table 2**

| | | Ex. 3 | Ex. 4 | Ex. 5 | Ex. 6 | Ex. 7 | Ex. 8 | Comp. Ex. 4 | Comp. Ex. 5 |
|---|---|---|---|---|---|---|---|---|---|
| Components | (A) PA2 (parts by weight) | 100 | 100 | 100 | 100 | 100 | 100 | 100 | 100 |
| | (B) FR1 (parts by weight) | 21 | 36 | 45 | 45 | 45 | 60 | 10 | 75 |
| | (C) Sb₂O₃ (parts by weight) | 7 | 12 | 15 | 15 | 15 | 20 | 3 | 25 |
| | (D) DHT (parts by weight) | 2 | 2 | 0.5 | 3 | 2 | 2 | 2 | 2 |
| | (E) GC (parts by weight) | 0 | 70 | 0 | 0 | 50 | 40 | 70 | 70 |
| Evaluation | Kneading workability | A | A | A | A | A | A | A | C |
| | Color tone | A | A | A | A | A | A | A | A |
| | Flammability | A | A | A | A | A | A | C | A |
| | Tenacity | A | A | A | A | A | A | A | B |

| **Evaluation standards** | | | | | | | |
|---|---|---|---|---|---|---|---|
| Kneading workability | | Color tone | | Flammability | | Tenacity | |
| A | No string break | A | Pale yellow; ivory | A | UL V-0 was accomplished | A | Connectors did not crack at all. |
| B | String Break occurred 1 to 5 times | B | Dark yellow; pale gray | | | B | 1 to 3 connectors cracked. |
| C | Break occurred at least 6 times | C | Dark brown; dark gray, black stripe appeared | C | UL V-0 was not accomplished | C | Art least 4 connectors cracked. |

### COMPARATIVE EXAMPLES 6 TO 12

In each of Comparative Examples 6 to 12, components were blended at a ratio as shown in Table 3. The resulting mixture was kneaded in a twin screw extrusion kneading ("TEM35", trade name; product of Toshiba Corporation) at a resin temperature of 300 to 360°C and a discharge rate of 15 kg/h, whereby a flame-retardant aromatic polyamide resin composition was prepared in the form of pellets.

The properties of the resulting resin similar to those of Example 3 were evaluated and results are shown in Table 3 together with the results of Example 4.

**Table 3**

| | | Ex. 4 | Comp. Ex. 3 | Comp. Ex. 4 | Comp. Ex. 5 | Comp. Ex. 6 | Comp. Ex. 7 | Comp. Ex. 8 | Comp. Ex. 9 |
|---|---|---|---|---|---|---|---|---|---|
| Kind of flame retardant | (B) FR1 (parts by weight) | 36 | | | | | | | |
| | (B) FR2 (parts by weight) | | 36 | | | | | | |
| | (B) FR3 (parts by weight) | | | 36 | | | | | |
| | (B) FR4 (parts by weight) | | | | 36 | | | | |
| | (B) FR5 (parts by weight) | | | | | 36 | | | |
| | (B) FR6 (parts by weight) | | | | | | 36 | | |
| | (B) FR7 (parts by weight) | | | | | | | 36 | |
| | (B) FR8 (parts by weight) | | | | | | | | 36 |
| Evaluation | Kneading workability | | A | A | C | C | A | A | A |
| | Color Evalu- Color tone | | A | A | C | B | C | B | C |
| | Flammability | | A | A | A | A | A | A | A |
| | Tenacity | | C | C | B | C | A | C | A |

Components employed in common: 100 parts by weight of PA2, 12 parts by weight of Sb₂O₃, 2 parts by weight of DHT and 70 parts by weight of GC

| **Evaluation standards** | | | | | | | |
|---|---|---|---|---|---|---|---|
| Kneading workability | | Color tone | | Flammability | | Tenacity | |
| A | No string break | A | Pale yellow; ivory | A | UL V-0 was accomplished | A | Connectors did not crack at all. |
| B | String Break occurred 1 to 5 times | B | Dark yellow; pale gray | | | B | 1 to 3 connectors cracked. |
| C | String Break occurred at least 6 times | C | Dark brown; dark gray, black stripe appeared | C | UL V-0 was not accomplished | C | Art least 4 connectors cracked. |

## Claims

1. A flame-retardant aromatic polyamide resin composition comprising:
100 parts by weight of (A) an aromatic polyamide resin having a melting point of 280 to 330°C,
15 to 60 parts by weight of (B) a terminal-modified polybromophenylene oxide,
5 to 30 parts by weight of (C) antimony trioxide,
0 to 10 parts by weight of (D) a halogen scavenger, and
0 to 200 parts by weight of (E) an inorganic filler.

2. The flame-retardant aromatic polyamide resin composition according to claim 1, wherein the aromatic polyamide resin (A) having a melting point of 280 to 330°C is composed of:
30 to 70 parts by weight of (a) an equimolar salt of hexamethylenediamine and adipic acid,
70 to 30 parts by weight of (b) an equimolar salt of hexamethylenediamine and terephthalic acid, and
0 to 15 parts by weight of (c) an aliphatic-polyamide-forming monomer.

3. The flame-retardant aromatic polyamide resin composition according to claim 2, wherein the aliphatic-polyamide-forming monomer (c) is a polyamide 12 component.

4. The flame-retardant aromatic polyamide resin composition according to any one of claims 1 to 3, wherein the terminal-modified polybromophenylene oxide (B) is polybromophenylene oxide having an esterified terminal.

5. The flame-retardant aromatic polyamide resin composition according to any one of claims 1 to 4, wherein the halogen scavenger (D) is a hydrotalcite compound which has been treated to remove the crystallization water thereof by at least 30%.

## Patentansprüche

1. Flammenbeständige Zusammensetzung mit einem aromatischen Polyamidharz, umfassend:
100 Gewichtsteile (A) eines aromatischen Polyamidharzes mit einem Schmelzpunkt im Bereich von 280 bis 330 °C,
15 bis 60 Gewichtsteile (B) eines endständig modifizierten Polybromphenylenoxids,
5 bis 30 Gewichtsteile (C) Antimontrioxid,
0 bis 10 Gewichtsteile (D) eines Halogenradikalfängers und
0 bis 200 Gewichtsteile (E) eines anorganischen Füllstoffes.

2. Flammenbeständige Zusammensetzung mit einem aromatischen Polyamidharz nach Anspruch 1, wobei das aromatische Polyamidharz (A) mit einem Schmelzpunkt im Bereich von 280 bis 330 °C zusammengesetzt ist aus:
30 bis 70 Gewichtsteilen (a) eines äquimolaren Salzes von Hexamethylendiamin und Adipinsäure,
70 bis 30 Gewichtsteilen (b) eines äquimolaren Salzes von Hexamethylendiamin und Terephthalsäure und
0 bis 15 Gewichtsteilen (c) eines Monomers, das ein aliphatisches Polyamid bildet.

3. Flammenbeständige Zusammensetzung mit einem aromatischen Polyamidharz nach Anspruch 2, wobei das Monomer (c), das ein aliphatisches Polyamid bildet, ein Polyamid 12-Bestandteil ist.

4. Flammenbeständige Zusammensetzung mit einem aromatischen Polyamidharz nach einem der Ansprüche 1 bis 3, wobei das endständig modifizierte Polybromphenylenoxid (B) ein Polybromphenylenoxid mit einer veresterten endständigen Gruppe ist.

5. Flammenbeständige Zusammensetzung mit einem aromatischen Polyamidharz nach einem der Ansprüche 1 bis 4, wobei der Halogenradikalfänger (D) eine Hydrotalcitverbindung ist, deren Gehalt an Kristallwasser durch eine Behandlung um mindestens 30 % verringert wurde.

## Revendications

1. Composition ignifugée de résine polyamide aromatique comprenant :
- 100 parties en poids d'une (A) résine polyamide aromatique ayant un point de fusion de 280 à 330°C,
- 15 à 60 parties en poids d'un (B) oxyde de polybromophénylène modifié aux extrémités,
- 5 à 30 parties en poids de (C) trioxyde d'antimoine,
- 0 à 10 parties en poids d'un (D) accepteur d'halogène, et
- 0 à 200 parties en poids d'une (E) charge inorganique.

2. Composition ignifugée de résine polyamide aromatique selon la revendication 1, dans laquelle la résine polyamide aromatique (A) ayant un point de fusion de 280 à 330°C est composée de :
- 30 à 70 parties en poids d'un (a) sel équimolaire d'héxaméthylènediamine et d'acide adipique,
- 70 à 30 parties en poids d'un (b) sel équimolaire d'héxaméthylènediamine et d'acide téréphtalique, et
- 0 à 15 parties en poids d'un (c) monomère de formage de polyamide aliphatique.

3. Composition ignifugée de résine polyamide aromatique selon la revendication 2, dans laquelle le monomère de formage de polyamide aliphatique (c) est un composé polyamide 12.

4. Composition ignifugée de résine polyamide aromatique selon l'une quelconque des revendications 1 à 3, dans laquelle l'oxyde polybromophénylène modifié aux extrémités (B) est un oxyde polybromophénylène ayant une extrémité estérifiée.

5. Composition ignifugée de résine polyamide aromatique selon l'une quelconque des revendications 1 à 4, dans laquelle l'accepteur d'halogène (D) est un composé d'hydrotalcite qui a été traité pour enlever au moins 30% de son eau de cristallisation.
